(19) Europäisches Patentamt
European Patent Office
Office européen des brevets

(11) **EP 4 421 518 A1**

(12) **EUROPEAN PATENT APPLICATION**

(43) Date of publication:
**28.08.2024  Bulletin 2024/35**

(21) Application number: **23188106.1**

(22) Date of filing: **27.07.2023**

(51) International Patent Classification (IPC):
**G01S 7/292** (2006.01)     **G01S 7/41** (2006.01)
**G01S 13/522** (2006.01)     **G01S 13/56** (2006.01)
**G01S 13/58** (2006.01)

(52) Cooperative Patent Classification (CPC):
**G01S 13/522; G01S 7/2927; G01S 7/414;
G01S 7/415; G01S 13/56; G01S 13/581**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.02.2023  KR 20230024399**

(71) Applicant: **Agency For Defense Development
Daejeon 34060 (KR)**

(72) Inventors:
• **JANG, Youn Hui
  34060 Daejeon (KR)**
• **YANG, Eunjung
  34060 Daejeon (KR)**

(74) Representative: **HWP Intellectual Property
Ridlerstraße 35
80339 München (DE)**

Remarks:
Claims filed after the date of filing of the application
(Rule 68(4) EPC).

(54) **APPARATUS AND METHOD FOR CLASSIFYING TRUE TARGET IN DOPPLER DOMAIN USING ENERGY VALUE, AND PULSE DOPPLER RADAR USING THE SAME**

(57)    An apparatus for classifying a true target includes a signal processor configured to perform range processing on an input signal in a fast time direction and Doppler processing on the input signal in a slow time direction to output an output signal in a range-Doppler domain, a detector configured to output a hit by detecting a target signal within an output signal on which the range processing and the Doppler processing have been performed in the signal processor, a total energy calculator configured to calculate a total energy value of the input signal of the signal processor in the slow time direction or a total energy value which is a sum of power spectra of the output signal of the signal processor in the Doppler direction, a Doppler ratio value calculator configured to calculate a Doppler ratio value of the hit detected in the range-Doppler domain using the total energy value, and a false target remover configured to compare the Doppler ratio value with a threshold value and determine a hit having the Doppler ratio value smaller than the threshold value as a false target.

FIG. 1

**Description**

## CROSS-REFERENCE TO RELATED APPLICATION

This application claims priority to and the benefit of Korean Patent Application No. 10-2023-0024399 filed in the Korean Intellectual Property Office on February 23, 2023, the entire contents of which are incorporated herein by reference.

## BACKGROUND

### (a) Field

Embodiments of the present invention relates to an apparatus and method for classifying a true target in a Doppler domain using an energy value, and a pulse Doppler radar using the same.

### (b) Description of the Related Art

In order to detect a target, a signal processing method of a pulse Doppler radar performs signal processing on a Doppler domain to extract the presence or absence of the target and the corresponding velocity component. A coherent processing interval (CPI) required for Doppler processing is composed of a train of pulses. In this case, when pulse-type interference signals having large magnitude among some pulses inflow, false detection occurs in a result of the Doppler processing. In addition, in the actual radar operating environment, even in the case of a single target having a large signal, signals of Doppler sidelobes other than the Doppler center of the target may often occur as additional false targets. Therefore, the pulse Doppler radar may extract an accurate velocity component of the target, but has a problem of suppressing detection of many false targets in the Doppler domain.

In order to solve the false targets in the Doppler domain, complex methods that use a two-dimensional detector that performs detection in a range-Doppler direction or consider a signal magnitude shape or gradient in the Doppler direction for the detected signal may also be applied. While this method requires a large amount of computation, it is difficult to satisfy sufficient false targets removal performance for complex and diverse target situations. For example, when a sidelobe signals caused by a clutters with large amplitude and a target signal with a relatively small amplitude are mixed, the desired target signal may be removed or the sidelobe signal due to the clutter may not be removed.

## SUMMARY

Embodiments of the present disclosure attempts to an apparatus and method for classifying a true target in a Doppler domain using a ratio value for a magnitude of a signal detected in a range-Doppler domain, and a pulse Doppler radar using the same.

According to an embodiment of the present invention, an apparatus for classifying a true target includes: a signal processor configured to perform range processing on an input signal in a fast time direction and Doppler processing on the input signal in a slow time direction to output an output signal in a range-Doppler domain; a detector configured to output a hit by detecting a target signal within an output signal on which the range processing and the Doppler processing have been performed in the signal processor; a total energy calculator configured to calculate a total energy value of the input signal of the signal processor in the slow time direction or a total energy value which is a sum of power spectra of the output signal of the signal processor in the Doppler direction; a Doppler ratio value calculator configured to calculate a Doppler ratio value of the hit detected in the range-Doppler domain using the total energy value; and a false target remover configured to compare the Doppler ratio value with a threshold value and determine a hit having the Doppler ratio value smaller than the threshold value as a false target.

The Doppler ratio value may have a value of 1 or less in all range-Doppler domains.

The Doppler ratio value calculator may calculate the Doppler ratio value by equation

$$R_{(i,j)} = \frac{|X(i,j)|^2}{E_i \times P}$$

, $0 \le R_{(i,j)} \le 1$, and $R_{(i,j)}$ may denote the Doppler ratio value, $E_i$ may denote the total energy value, P denotes the number of pulses in the input signal, and $X(i,j)$ may denote the output signal of the range-Doppler domain.

The threshold value may be preset by a user and is greater than 0 and less than 1.

According to another embodiment of the present invention, an apparatus for classifying a true target includes:

a signal processor configured to perform range processing on an input signal in a fast time direction and Doppler processing on the input signal in a slow time direction to output an output signal in a range-Doppler domain; a detector configured to output a hit by detecting a target signal within an output signal on which the range processing and the Doppler processing have been performed in the signal processor; a total energy calculator configured to calculate a total energy value that is a sum of power spectra in the Doppler direction in the output signal of the signal processor; a Doppler ratio value calculator configured to calculate a Doppler ratio value of the hit detected in the range-Doppler domain using the total energy value; and a false target remover configured to compare the Doppler ratio value with a threshold value and determine a hit having the Doppler ratio value smaller than the threshold value as a false target.

According to another embodiment of the present invention, a method of classifying a true target includes: performing range processing on an input signal in a fast time direction and Doppler processing on the input signal in a slow time direction to output an output signal in a range-Doppler domain; outputting a hit that is a result of being detected as a target signal within an output signal of the range-Doppler domain; calculating at least one of a first total energy value of the input signal in a slow time direction and a second total energy value that is a sum of power spectra of the output signal in the range-Doppler domain in a Doppler direction; calculating a Doppler ratio value of a hit detected in the range-Doppler domain by using one of the first total energy value and the second total energy value as the total energy value; and comparing the Doppler ratio value with a threshold value to remove a false target having the Doppler ratio value less than the threshold value.

According to another embodiment of the present invention, a pulse Doppler radar includes: a pulse Doppler processor configured to perform range processing on an input signal in a fast time direction and Doppler processing on the input signal in a slow time direction to output an output signal in a range-Doppler domain, and detect a target signal within the output signal to output a hit; a total energy calculator configured to calculate a total energy value in the slow time direction from the input signal; a Doppler ratio value calculator configured to calculate a Doppler ratio value of the hit detected in the range-Doppler domain using the total energy value; a false target remover configured to compare the Doppler ratio value with a threshold value and removes a hit having a Doppler ratio value smaller than the threshold value; and a target detector configured to perform target detection using only a hit having a Doppler ratio value equal to or greater than the threshold value.

According to another embodiment of the present invention, a pulse Doppler radar includes: a pulse Doppler processor configured to perform range processing on an input signal in a fast time direction and Doppler processing on the input signal in a slow time direction to output an output signal in a range-Doppler domain, and detect a target signal within the output signal to output a hit; a total energy calculator configured to calculate a total energy value that is a sum of power spectra in the Doppler direction in the output signal; a Doppler ratio value calculator configured to calculate a Doppler ratio value of the hit detected in the range-Doppler domain using the total energy value; a false target remover configured to compare the Doppler ratio value with a threshold value and removes a hit having a Doppler ratio value smaller than the threshold value; and a target detector configured to perform target detection using only a hit having a Doppler ratio value equal to or greater than the threshold value.

According to an exemplary embodiment of the present invention, an apparatus for classifying a true target may not only classify a target of a small RCS through a simple Doppler ratio calculation, and may determine a true target in various Doppler environments according to a threshold value designed by a user.

## BRIEF DESCRIPTION OF THE DRAWINGS

FIG. 1 is a diagram illustrating a pulse Doppler radar including an apparatus for classifying a true target according to an exemplary embodiment of the present invention.
FIG. 2 is a diagram illustrating an input signal and an output signal of a pulse Doppler processor according to an exemplary embodiment of the present invention.
FIG. 3 is a diagram illustrating energy values of an input signal and an output signal of a pulse Doppler processor according to an exemplary embodiment of the present invention.
FIG. 4 is a diagram illustrating a method of classifying a true target according to an exemplary embodiment of the present invention.
FIGS. 5 to 8 are exemplary diagrams for describing a process of processing a first target of a small radar cross section (RCS) and a second target of a sufficiently large RCS with the method of classifying the doppler centroid of a true target according to an exemplary embodiment of the present invention.
FIGS. 9 to 12 are exemplary diagrams for describing a process of processing two interference signals and a target of a sufficiently large RCS with the method of classifying a true target according to an exemplary embodiment of the present invention.

## DETAILED DESCRIPTION

Hereinafter, exemplary embodiments of the present invention will be described in detail with reference to the accompanying drawings so that those skilled in the art to which the present invention pertains may easily practice the present invention. However, the present invention may be implemented in various different forms and is not limited to exemplary embodiments provided herein.

Portions unrelated to the description will be omitted in order to obviously describe the present invention, and similar components will be denoted by the same or similar reference numerals throughout the present specification.

In addition, unless explicitly described to the contrary, the word "comprise", and variations such as "comprising", will be understood to imply the inclusion of stated elements but not the exclusion of any other elements.

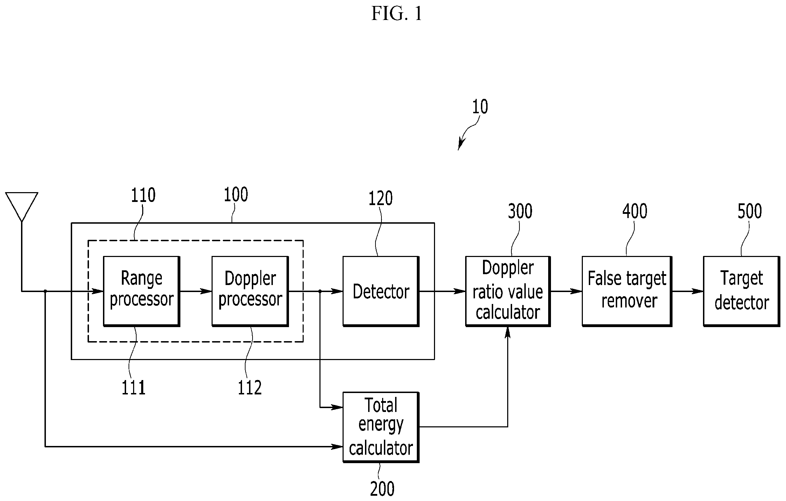

Hereinafter, referring to FIGS. 1 to 3, an apparatus for classifying a true target for a Doppler domain using a Doppler energy ratio value according to an exemplary embodiment of the present invention and a pulse Doppler radar using the same will be described.

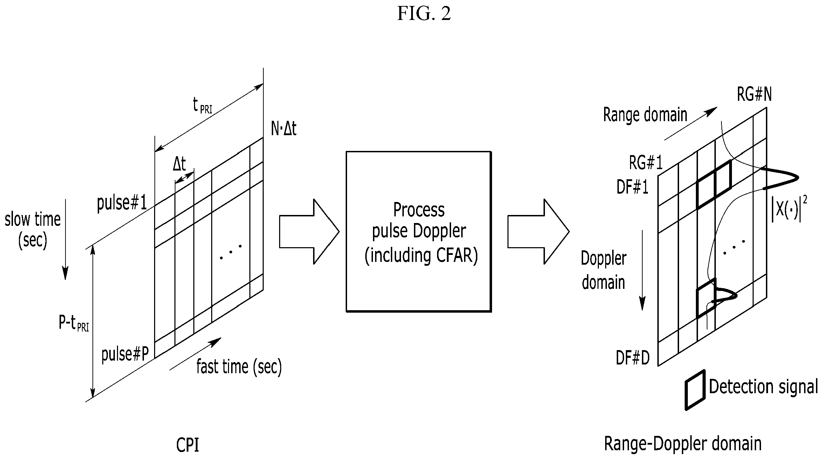

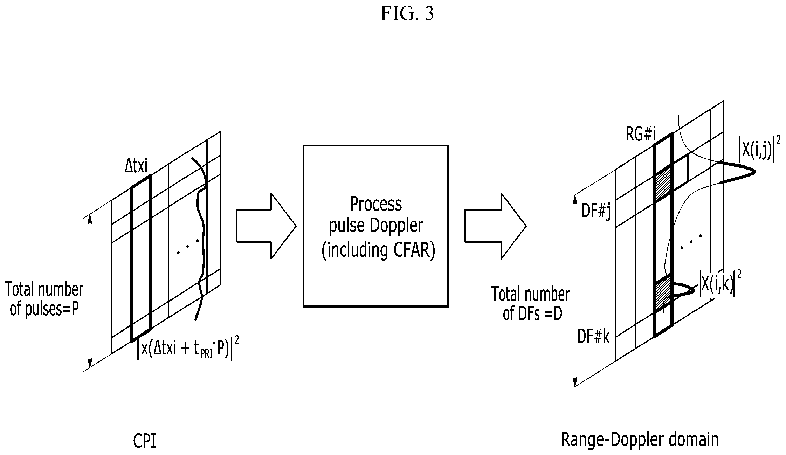

FIG. 1 is a diagram illustrating a pulse Doppler radar including an apparatus for classifying a true target according to an exemplary embodiment of the present invention. FIG. 2 is a diagram illustrating an input signal and an output signal of a pulse Doppler processing unit according to an exemplary embodiment of the present invention. FIG. 3 is a diagram illustrating energy values of an input signal and an output signal of a pulse Doppler processing unit according to an exemplary embodiment of the present invention.

Referring to FIGS. 1 to 3, a pulse Doppler radar 10 according to an exemplary embodiment of the present invention may include a pulse Doppler processor 100, a total energy calculator 200, a Doppler ratio value calculator 300, a false target remover 400, and a target detector 500.

An apparatus for classifying a true target according to an exemplary embodiment of the present invention may include a pulse Doppler processor 100, a total energy calculator 200, a Doppler ratio value calculator 300, and a false target remover 400.

The pulse Doppler processor 100 serves to increase a signal-to-noise ratio (SNR) of an input signal received from an antenna in order to accurately detect a target signal. The pulse Doppler processor 100 may include a signal processor 110 and a detector 120.

The signal processor 110 may perform range processing on an input signal received from an antenna (see CPI in FIG. 2) in a fast time direction and Doppler processing on the input signal in a slow time direction. When a pulse interval time is $t_{PRI}$, the fast time direction may divide one pulse interval time $t_{PRI}$ into N sampling time intervals $\Delta t$, and the slow time direction may divide a CPI times into P pulse interval times $t_{PRI}$.

To this end, the signal processor 110 may include a range processing unit 111 and a Doppler processor 112. The range processing unit 111 performs the range processing on the input signal in the fast time direction. The Doppler processor 112 performs the Doppler processing in the slow time direction. The range processing unit 111 may be omitted according to the design of the pulse Doppler radar 10 or may be disposed before or after the Doppler processor 112. The Doppler processor 112 may increase SNR by performing Doppler filtering on signals in the slow time direction at the same range point $\Delta t \times i$ of the input signal (see FIG. 3).

The detector 120 receives an output signal $X(\bullet)$ on which the range processing and Doppler processing have been performed in the signal processor 110, and detects a target signal within the output signal $X(\bullet)$. In this case, the detector 120 may detect a target signal while maintaining a constant false alarm rate by applying a constant false alarm rate (CFAR) technique.

The output signal $X(\bullet)$ is a complex signal meaning a spectrum of the range (i)-Doppler (j) domain expressed as $X(i,j)$, where $i$ = 1,...,$N$, and $j$ = 1,....,$D$. The range domain may be composed of N range cells RG#1 to RG#N, and the Doppler domain may be composed of D Doppler cells DF#1 to DF#D (Doppler filter). Accordingly, the detector 120 may detect the target signal using an absolute value $|X(\bullet)|$ of the output signal or an absolute value power $|X(\bullet)|^2$ of the output signal. As illustrated in FIG. 2, the detector 120 may output a hit, which is a result of detecting that the detection signal $|X(\bullet)|^2$ in the range-Doppler domain is the target signal.

The total energy calculator 200 may receive an input signal of the signal processor 110 and calculate a total energy value in the slow time direction from the input signal. Alternatively, the total energy calculator 200 may calculate the total energy value, which is the sum of power spectra in the Doppler direction, in the output signal on which the range processing and the Doppler processing have been performed in the signal processor 110.

The total energy calculator 200 can calculate the total energy value $E_i$ at the point RG#i in the range cell using Parseval's theorem as shown in Equation 1.

(Equation 1)

$$E_i = \sum_{p=0}^{P-1} x^2(\Delta t \times i + t_{PRI} \times p) = \frac{1}{D} \sum_{j=0}^{D-1} |X(i,j)|^2$$

Here, $x(\cdot)$ denotes the input signal (CPI), $X(i,j)$ denotes the output signal in the range (i)-Doppler (j) domain, $\Delta t$ denotes a sampling time interval, $t_{PRI}$ denotes the pulse interval time, P denotes the number of pulses in the input signal, and D denotes the number of Doppler filters in the Doppler domain.

The Parseval's theorem includes the meaning that the total energy of the input signal and the sum of the power spectra in the frequency domain are always equal. Accordingly, the total energy calculator 200 may selectively calculate the total energy value of the input signal in the slow time direction or the total energy value that is the sum of power spectra of the output signal in the Doppler direction. When the total energy value is calculated from the output signal, since the input signal is not used, it is possible to improve memory efficiency by reducing memory usage. In the case of calculating the total energy value of the input signal, since the number of pulses P is less than the number D of the Doppler filters in the Doppler domain, there is an advantage in that the amount of calculation is reduced.

The Doppler ratio value calculator 300 receives a hit from the detector 120 and receives the total energy value $E_i$ from the total energy calculator 200. The Doppler ratio value calculator 300 may calculate the Doppler ratio value $R_{(i,j)}$ of the hit detected in the range-Doppler domain (i, j) as shown in Equation 2 using the total energy value $E_i$.

(Equation 2)

$$R_{(i,j)} = \frac{|X(i,j)|^2}{E_i \times P}, \quad 0 \le R_{(i,j)} \le 1$$

The Doppler ratio value has a value of 1 or less in all range-Doppler domains. In particular, in the case of a target where a signal magnitude exists in all input pulses in the input signal, the Doppler ratio value always has a maximum value of 1 at the Doppler center of the target regardless of the radar cross section (RCS) of the target. In other words, even if the target is an input signal with a very small SNR, there is an advantage in that the Doppler ratio value becomes 1 at the corresponding Doppler center. On the other hand, a maximum value of the Doppler ratio value is less than 1 even if the output signal value $X(i,j)$ is large because a very large interference signal flows into some pulses.

The false target remover 400 receives the Doppler ratio value of the hit from the Doppler ratio value calculator 300. The false target remover 400 may compare the Doppler ratio value with a threshold value and determine a hit having a Doppler ratio value smaller than the threshold value as a false target. The false target remover 400 may remove the hit determined as the false target and output only the hit having the Doppler ratio value equal to or greater than the threshold value to the target detector 500. The threshold value may be preset by a user in consideration of a Doppler suppression value used for the Doppler processing, a design value of the pulse Doppler radar 10, and the like. The threshold value may be greater than 0 and smaller than 1.

The target detector 500 may perform the target detection using only the hit having the Doppler ratio value greater than or equal to the threshold value. That is, the target detector 500 may perform target detection by removing the false target and using hits of real targets.

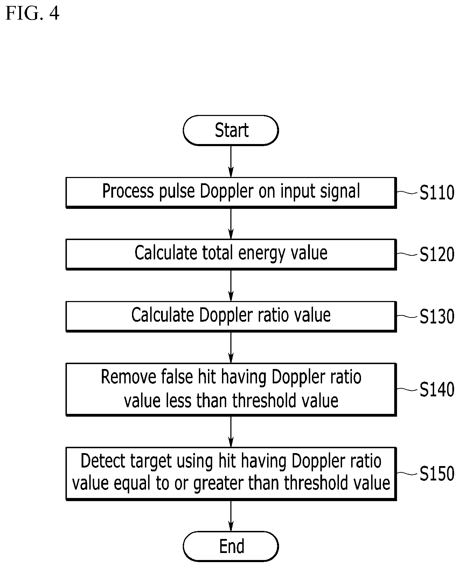

FIG. 4 is a diagram illustrating a method of classifying a true target according to an embodiment of the present invention.

Referring to FIG. 4, the apparatus for classifying a true target according to an exemplary embodiment of the present invention may perform pulse Doppler processing on an input signal received from an antenna (S110). The pulse Doppler processing may include range processing in a fast time direction and Doppler processing in a slow time direction. The apparatus for classifying a true target may output an output signal in a range-Doppler domain by performing pulse Doppler processing on an input signal. The apparatus for classifying a true target may output a hit, which is a result of being detected as a target signal within the output signal in the range-Doppler domain.

The apparatus for classifying a true target may calculate at least one of a first total energy value of the input signal in the slow time direction and a second total energy value that is the sum of power spectra of the pulse Doppler-processed output signal in the Doppler direction;

The apparatus for classifying a true target may selectively calculate the first total energy value of the input signal in the slow time direction or the second total energy value that is the sum of power spectra of the output signal in the Doppler direction according to the Parseval's theorem.

The apparatus for classifying a true target may calculate a Doppler ratio value of the hit detected in the range-Doppler domain (S130). Since the first total energy value and the second total energy value are the same according to the Parseval's theorem, the apparatus for classifying a true target may use any one of the first total energy value and the second total energy value as the total energy value to calculate the Doppler ratio value as shown in Equation 2 described above. The Doppler ratio value has a value of 1 or less.

The apparatus for classifying a true target may compare the Doppler ratio value with the threshold value to remove a false hit (false target) having a Doppler ratio value less than the threshold value (S140). The hit having the Doppler ratio value equal to or greater than the threshold value represents the real target. The threshold value may be set by a user in consideration of a Doppler suppression value used for the Doppler processing, a design value of the pulse Doppler radar 10, and the like.

The apparatus for classifying a true target may perform the target detection using only the hit having the Doppler ratio value greater than or equal to the threshold value (S150).

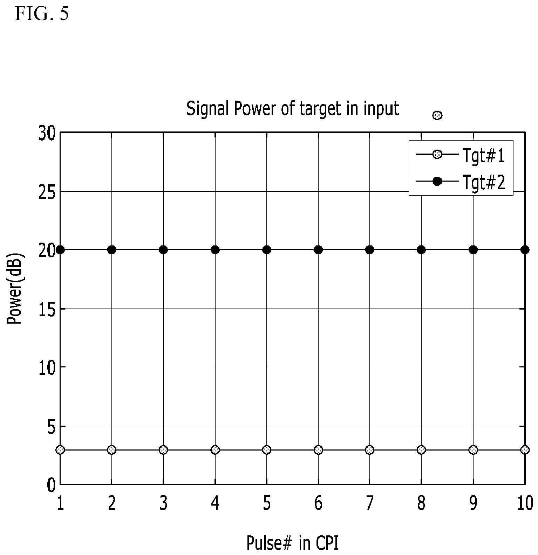

FIGS. 5 to 8 are exemplary diagrams for describing a process of processing a first target of a small radar cross section (RCS) and a second target of a sufficiently large RCS with the method of classifying a true target according to an exemplary embodiment of the present invention.

Referring to FIGS. 5 to 8, the number of pulses P of the input signal is 10, the number of Doppler filters D is 16, and the detection SNR is 13 dB. The input noise level is assumed to be 0 dB.

FIG. 5 illustrates the power of the input signal of the target in the CPI. An input SNR of an input signal of a first target Tgt#1 of the small RCS is 3 dB, and an input SNR of an input signal of a second target Tgt#2 having a sufficiently large RCS is 20 dB.

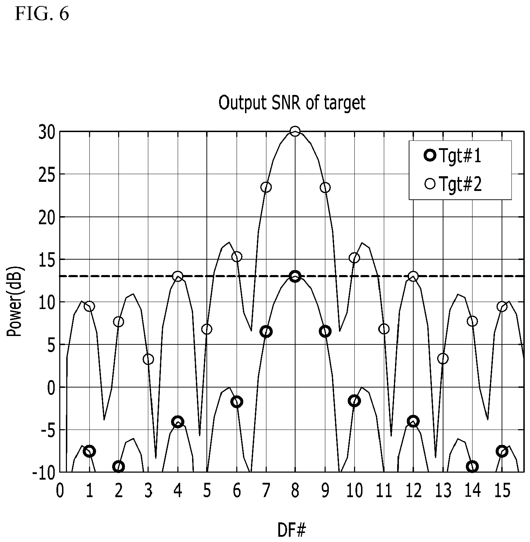

FIG. 6 illustrates the power of the pulse Doppler-processed output signal. A maximum output SNR of the output signal of the first target Tgt#1 is 13 dB, and a maximum output SNR of the output signal of the second target Tgt#2 is 30 dB. When applying the typical minimum detectable SNR=13 dB (detection threshold value) of the pulse Doppler radar to the output, the first target Tgt#1 is detected only in the Doppler filter DF#8, but the second target Tgt#2 is detected only in the Doppler filters DF#4 and DF#12 corresponding to a second sidelobe as well as around the Doppler filter DF#8. Accordingly, the second target Tgt#2 may generate hits in the DF#4, DF#6, DF#10, and DF#12.

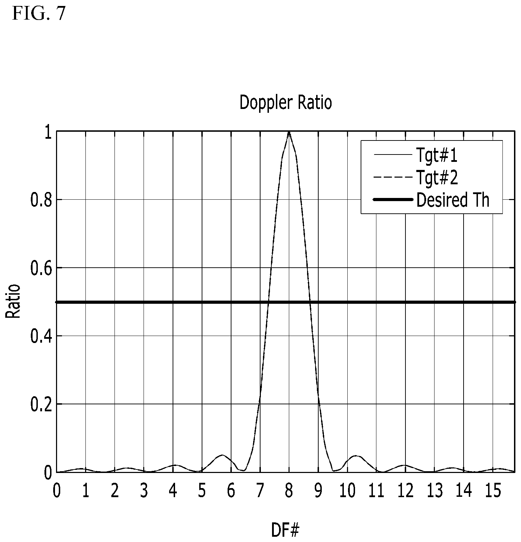

FIG. 7 shows Doppler ratio values of the first target Tgt#1 and the second target Tgt#2. The first target Tgt#1 and the second target Tgt#2 are equally distributed around the maximum value 1 regardless of the input SNR. By setting a threshold value Th of the desired Doppler ratio value, the false target may be removed.

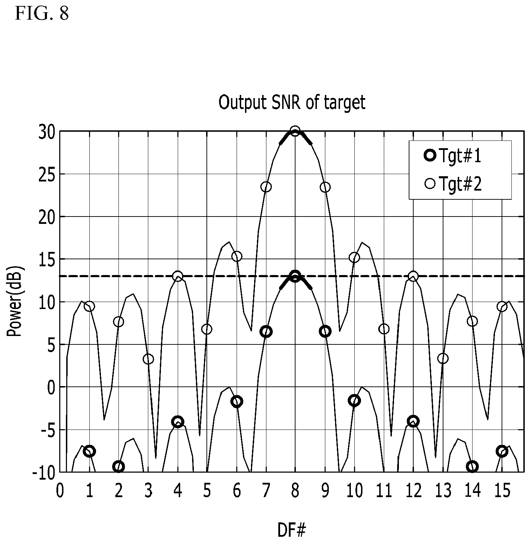

FIG. 8 illustrates detection of an output signal corresponding to a hit having a Doppler ratio value greater than or equal to a threshold value. When the threshold value Th is set to 0.5 in FIG. 7, hits having a Doppler ratio value equal to or greater than the threshold value correspond to a range greater than the DF#7 and less than the DF#9, and in FIG. 8, an output signal indicated by a thick solid line corresponding to a range greater than the DF#7 and smaller than the DF#9 may be detected as a hit of a real target.

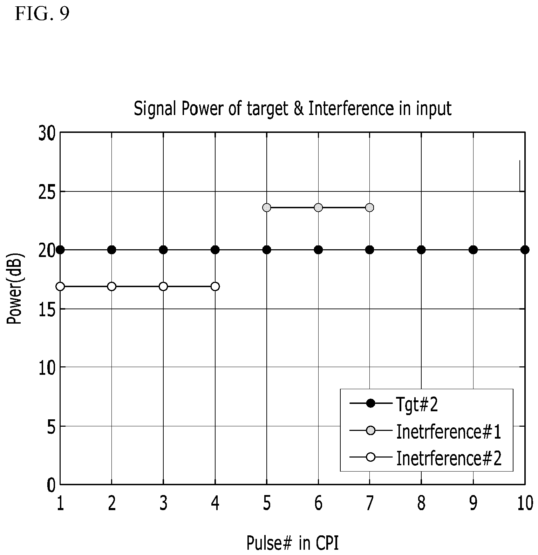

FIGS. 9 to 12 are exemplary diagrams for describing a process of processing two interference signals and a target of a sufficiently large RCS with the method of classifying a true target according to an exemplary embodiment of the present invention.

Referring to FIGS. 9 to 12, the number of pulses P of the input signal is 10, the number of Doppler filters D is 16, and the detection SNR is 13 dB.

FIG. 9 illustrates the power of the input signal of the second target in the CPI and the interference signal. The input SNR of the input signal of the second target Tgt#2 is 20 dB, a first interference signal Interference#1 is an input interference-to-noise ratio (INR) signal of about 24 dB and flows into three pulses, and a second interference signal Interference#2 is an input INR signal of about 17 dB and flows into four pulses.

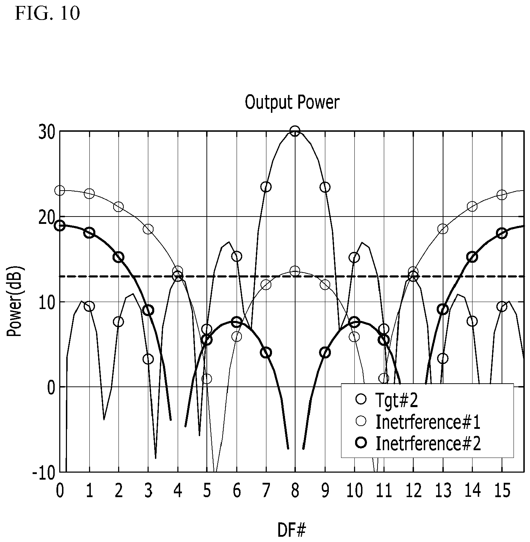

FIG. 10 illustrates the power of the pulse Doppler-processed output signal and the interference signal. Since the first interference signal Interference#1 and the second interference signal Interference#2 have magnitudes much greater than the detection threshold of 13 dB, the hit of the false target is generated.

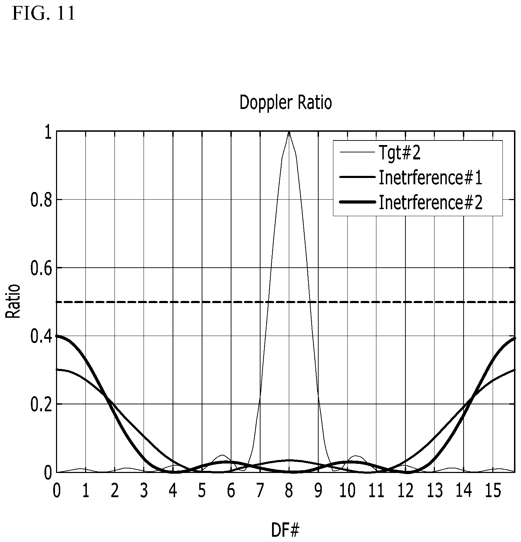

FIG. 11 illustrates the Doppler ratio values of the second target Tgt#2, the first interference signal Interference#1, and the second interference signal (Interference#2). Since the Doppler ratio values of the first interference signal Interference#1 and the second interference signal Interference#2 have a much lower value than the Doppler ratio value of the second target Tgt#2, the first interference signal Interference#1 and the second interference signal Interference#2 may be determined as the false targets by the threshold value Th of the Doppler ratio value.

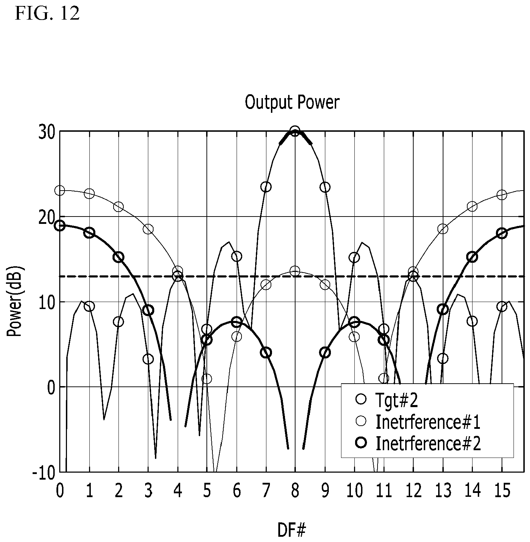

FIG. 12 illustrates the detection of the output signal corresponding to the hit having the Doppler ratio value greater than or equal to the threshold value. In FIG. 11, when the threshold value Th is set to 0.5, the hits by the first interference signal Interference#1 and the second interference signal Interference#2 are determined as the false targets and removed, and the output signal of the second target Tgt#2 indicated by a thick solid line corresponding to a range greater than the DF#7 and smaller than DF#9 may be detected as the hit of the real target.

As described above, according to an exemplary embodiment of the present invention, the apparatus for classifying a true target may not only classify a target of a small RCS through a simple Doppler ratio calculation, and may determine a true target in various Doppler environments according to a threshold designed by a user.

The drawings and detailed description of the present invention referred to so far are only examples of the present invention, which are only used for the purpose of explaining the present invention, and are not used to limit the scope of the present invention described in the meaning or claims. Therefore, it will be understood by those skilled in the art that various modifications and equivalent other embodiments are possible therefrom. Accordingly, an actual technical scope of the present invention is to be defined by a technical spirit of the following claims.

**Embodiments:**

1. An apparatus for classifying a true target, comprising:

a signal processor (110) configured to perform range processing on an input signal in a fast time direction and Doppler processing on the input signal in a slow time direction to output an output signal in a range-Doppler domain;
a detector (120) configured to output a hit by detecting a target signal within an output signal on which the range processing and the Doppler processing have been performed in the signal processor (110);
a total energy calculator (200) configured to calculate a total energy value of the input signal of the signal processor (110) in the slow time direction or a total energy value which is a sum of power spectra of the output signal of the signal processor (110) in a Doppler direction;
a Doppler ratio value calculator (300) configured to calculate a Doppler ratio value of the hit detected in the range-Doppler domain using the total energy value; and
a false target remover (400) configured to compare the Doppler ratio value with a threshold value and determine a hit having the Doppler ratio value smaller than the threshold value as a false target.

2. The apparatus of embodiment 1, wherein:
the Doppler ratio value has a value of 1 or less in all range-Doppler domains.

3. The apparatus of one of embodiments 1 and 2, wherein:

the Doppler ratio value calculator (300)

$$R_{(i,j)} = \frac{|X(i,j)|^2}{E_i \times P}$$

calculates the Doppler ratio value by equation $\qquad$ , $0 \le R_{(i,j)} \le 1$, and

$R_{(i,j)}$ denotes the Doppler ratio value, $E_i$ denotes the total energy value, P denotes the number of pulses in the input signal, and X($i,j$) denotes the output signal of the range-Doppler domain.

4. The apparatus of one of embodiments 1 to 3, wherein:
the threshold value is preset by a user and is greater than 0 and less than 1.

5. An apparatus for classifying a true target, comprising:

a signal processor (110) configured to perform range processing on an input signal in a fast time direction and Doppler processing on the input signal in a slow time direction to output an output signal in a range-Doppler domain;
a detector (120) configured to output a hit by detecting a target signal within an output signal on which the range processing and the Doppler processing have been performed in the signal processor (110);
a total energy calculator (200) configured to calculate a total energy value that is a sum of power spectra in the Doppler direction in the output signal of the signal processor (110);
a Doppler ratio value calculator (300) configured to calculate a Doppler ratio value of the hit detected in the range-Doppler domain using the total energy value; and
a false target remover (400) configured to compare the Doppler ratio value with a threshold value and determine a hit having the Doppler ratio value smaller than the threshold value as a false target.

6. The apparatus of embodiment 5, wherein:
the Doppler ratio value has a value of 1 or less in all range-Doppler domains.

7. The apparatus of one of embodiments 5 and 6, wherein:

the Doppler ratio value calculator (300)

calculates the Doppler ratio value by equation
$$R_{(i,j)} = \frac{|X(i,j)|^2}{E_i \times P}$$
, $0 \leq R_{(i,j)} \leq 1$, and
$R_{(i,j)}$ denotes the Doppler ratio value, $E_i$ denotes the total energy value, P denotes the number of pulses in the input signal, and $X(i,j)$ denotes the output signal of the range-Doppler domain.

8. The apparatus of one of embodiments 5 to 7, wherein:
the threshold value is preset by a user and is greater than 0 and less than 1.

9. A method of classifying a true target, comprising:

performing range processing on an input signal in a fast time direction and Doppler processing on the input signal in a slow time direction to output an output signal in a range-Doppler domain;
outputting a hit that is a result of being detected as a target signal within an output signal of the range-Doppler domain;
calculating at least one of a first total energy value of the input signal in a slow time direction and a second total energy value that is a sum of power spectra of the output signal in the range-Doppler domain in a Doppler direction;
calculating a Doppler ratio value of a hit detected in the range-Doppler domain by using one of the first total energy value and the second total energy value as the total energy value; and
comparing the Doppler ratio value with a threshold value to remove a false target having the Doppler ratio value less than the threshold value.

10. The method of embodiment 9, wherein:
the Doppler ratio value has a value of 1 or less in all range-Doppler domains.

11. The method of one of embodiments 9 and 10, wherein:
the threshold value is preset by a user and is greater than 0 and less than 1.

12. A pulse Doppler radar (10), comprising:

a pulse Doppler processor (100) configured to perform range processing on an input signal in a fast time direction and Doppler processing on the input signal in a slow time direction to output an output signal in a range-Doppler domain, and detect a target signal within the output signal to output a hit;
a total energy calculator (200) configured to calculate a total energy value in the slow time direction from the input signal;
a Doppler ratio value calculator (300) configured to calculate a Doppler ratio value of the hit detected in the range-Doppler domain using the total energy value;
a false target remover (400) configured to compare the Doppler ratio value with a threshold value and removes a hit having a Doppler ratio value smaller than the threshold value; and
a target detector (500) configured to perform target detection using only a hit having a Doppler ratio value equal to or greater than the threshold value.

13. The pulse Doppler radar (10) of embodiment 12, wherein:
the Doppler ratio value has a value of 1 or less in all range-Doppler domains.

14. The pulse Doppler radar (10) of one of embodiments 12 and 13, wherein:

the Doppler ratio value calculator (300)

calculates the Doppler ratio value by equation 
$$R_{(i,j)} = \frac{|X(i,j)|^2}{E_i \times P}$$
, $0 \le R_{(i,j)} \le 1$, and

$R_{(i,j)}$ denotes the Doppler ratio value, $E_i$ denotes the total energy value, P denotes the number of pulses in the input signal, and $X(i,j)$ denotes the output signal of the range-Doppler domain.

15. The pulse Doppler radar (10) of one of embodiments 12 to 14, wherein:
the threshold value is preset by a user and is greater than 0 and less than 1.

16. A pulse Doppler radar (10), comprising:

a pulse Doppler processor (100) configured to perform range processing on an input signal in a fast time direction and Doppler processing on the input signal in a slow time direction to output an output signal in a range-Doppler domain, and detect a target signal within the output signal to output a hit;
a total energy calculator (200) configured to calculate a total energy value that is a sum of power spectra in a Doppler direction in the output signal;
a Doppler ratio value calculator (300) configured to calculate a Doppler ratio value of the hit detected in the range-Doppler domain using the total energy value;
a false target remover (400) configured to compare the Doppler ratio value with a threshold value and removes a hit having a Doppler ratio value smaller than the threshold value; and
a target detector (500) configured to perform target detection using only a hit having a Doppler ratio value equal to or greater than the threshold value.

17. The pulse Doppler radar (10) of embodiment 16, wherein:
the Doppler ratio value has a value of 1 or less in all range-Doppler domains.

18. The pulse Doppler radar (10) of one of embodiments 16 and 17, wherein:

the Doppler ratio value calculator (300)

calculates the Doppler ratio value by equation 
$$R_{(i,j)} = \frac{|X(i,j)|^2}{E_i \times P}$$
, $0 \le R_{(i,j)} \le 1$, and

$R_{(i,j)}$ denotes the Doppler ratio value, $E_i$ denotes the total energy value, P denotes the number of pulses in the input signal, and $X(i,j)$ denotes the output signal of the range-Doppler domain.

19. The pulse Doppler radar (10) of one of embodiments 16 to 18, wherein:
the threshold value is preset by a user and is greater than 0 and less than 1.

## Claims

1. An apparatus for classifying a true target, comprising:

a signal processor (110) configured to perform range processing on an input signal in a fast time direction and Doppler processing on the input signal in a slow time direction to output an output signal in a range-Doppler domain;
a detector (120) configured to output a hit by detecting a target signal within an output signal on which the range processing and the Doppler processing have been performed in the signal processor (110);
a total energy calculator (200) configured to calculate a total energy value of the input signal of the signal processor (110) in the slow time direction or a total energy value which is a sum of power spectra of the output signal of the signal processor (110) in a Doppler direction;
a Doppler ratio value calculator (300) configured to calculate a Doppler ratio value of the hit detected in the range-Doppler domain using the total energy value; and
a false target remover (400) configured to compare the Doppler ratio value with a threshold value and determine a hit having the Doppler ratio value smaller than the threshold value as a false target,
wherein the Doppler ratio value has a value of 1 or less in all range-Doppler domains.

2. The apparatus of claim 1, wherein:

the Doppler ratio value calculator (300)

$$R_{(i,j)} = \frac{|X(i,j)|^2}{E_i \times P}$$

calculates the Doppler ratio value by equation , $0 \le R_{(i,j)} \le 1$, and
$R_{(i,j)}$ denotes the Doppler ratio value, $E_i$ denotes the total energy value, P denotes the number of pulses in the input signal, and $X(i,j)$ denotes the output signal of the range-Doppler domain.

3. The apparatus of one of claims 1 and 2, wherein:
the threshold value is preset by a user and is greater than 0 and less than 1.

4. A method of classifying a true target, comprising:

performing range processing on an input signal in a fast time direction and Doppler processing on the input signal in a slow time direction to output an output signal in a range-Doppler domain;
outputting a hit that is a result of being detected as a target signal within an output signal of the range-Doppler domain;
calculating at least one of a first total energy value of the input signal in a slow time direction and a second total energy value that is a sum of power spectra of the output signal in the range-Doppler domain in a Doppler direction;
calculating a Doppler ratio value of a hit detected in the range-Doppler domain by using one of the first total energy value and the second total energy value as the total energy value; and
comparing the Doppler ratio value with a threshold value to remove a false target having the Doppler ratio value less than the threshold value,
wherein the Doppler ratio value has a value of 1 or less in all range-Doppler domains.

5. The method of claim 4, wherein:
the threshold value is preset by a user and is greater than 0 and less than 1.

6. A pulse Doppler radar (10), comprising:

a pulse Doppler processor (100) configured to perform range processing on an input signal in a fast time direction and Doppler processing on the input signal in a slow time direction to output an output signal in a range-Doppler domain, and detect a target signal within the output signal to output a hit;
a total energy calculator (200) configured to calculate a total energy value in the slow time direction from the input signal;
a Doppler ratio value calculator (300) configured to calculate a Doppler ratio value of the hit detected in the range-Doppler domain using the total energy value;
a false target remover (400) configured to compare the Doppler ratio value with a threshold value and removes a hit having a Doppler ratio value smaller than the threshold value; and
a target detector (500) configured to perform target detection using only a hit having a Doppler ratio value equal to or greater than the threshold value
wherein the Doppler ratio value has a value of 1 or less in all range-Doppler domains.

7. The pulse Doppler radar (10) of claim 6, wherein:

the Doppler ratio value calculator (300)

$$R_{(i,j)} = \frac{|X(i,j)|^2}{E_i \times P}$$

calculates the Doppler ratio value by equation , $0 \le R_{(i,j)} \le 1$, and
$R_{(i,j)}$ denotes the Doppler ratio value, $E_i$ denotes the total energy value, P denotes the number of pulses in the input signal, and $X(i,j)$ denotes the output signal of the range-Doppler domain.

**8.** The pulse Doppler radar (10) of one of claims 6 and 7, wherein:
the threshold value is preset by a user and is greater than 0 and less than 1.

**Amended claims in accordance with Rule 137(2) EPC.**

**1.** An apparatus for classifying a true target, comprising:

a signal processor (110) configured to perform range processing on an input signal in a fast time direction and Doppler processing on the input signal in a slow time direction to output an output signal in a range-Doppler domain;
a detector (120) configured to output a hit by detecting a target signal within an output signal on which the range processing and the Doppler processing have been performed in the signal processor (110);
a total energy calculator (200) configured to calculate a total energy value of the input signal of the signal processor (110) in the slow time direction or a total energy value which is a sum of power spectra of the output signal of the signal processor (110) in a Doppler direction;
a Doppler ratio value calculator (300) configured to calculate a Doppler ratio value of the hit detected in the range-Doppler domain using the total energy value; and
a false target remover (400) configured to compare the Doppler ratio value with a threshold value and determine a hit having the Doppler ratio value smaller than the threshold value as a false target,
wherein the Doppler ratio value has a value of 1 or less in all range-Doppler domains, and
wherein the Doppler ratio value calculator (300) calculates the Doppler ratio value by equation

$$R_{(i,j)} = \frac{|X(i,j)|^2}{E_i \times P}, \quad 0 \leq R_{(i,j)} \leq 1$$

,

and
$R_{(i,j)}$ denotes the Doppler ratio value, $E_i$ denotes the total energy value, P denotes the number of pulses in the input signal, and $X(i,j)$ denotes the output signal of the range-Doppler domain.

**2.** The apparatus of claim 1, wherein:
the threshold value is preset by a user and is greater than 0 and less than 1.

**3.** A method of classifying a true target, comprising:

performing range processing on an input signal in a fast time direction and Doppler processing on the input signal in a slow time direction to output an output signal in a range-Doppler domain;
outputting a hit that is a result of being detected as a target signal within an output signal of the range-Doppler domain;
calculating at least one of a first total energy value of the input signal in a slow time direction and a second total energy value that is a sum of power spectra of the output signal in the range-Doppler domain in a Doppler direction;
calculating a Doppler ratio value of a hit detected in the range-Doppler domain by using one of the first total energy value and the second total energy value as the total energy value; and
comparing the Doppler ratio value with a threshold value to remove a false target having the Doppler ratio value less than the threshold value,
wherein the Doppler ratio value has a value of 1 or less in all range-Doppler domains, and
wherein the Doppler ratio value calculator (300) calculates the Doppler ratio value by equation

$$R_{(i,j)} = \frac{|X(i,j)|^2}{E_i \times P}, \quad 0 \leq R_{(i,j)} \leq 1$$

,

and

$R_{(i,j)}$ denotes the Doppler ratio value, $E_i$ denotes the total energy value, P denotes the number of pulses in the input signal, and $X(i,j)$ denotes the output signal of the range-Doppler domain.

4. The method of claim 3, wherein:
   the threshold value is preset by a user and is greater than 0 and less than 1.

5. A pulse Doppler radar (10), comprising:

   a pulse Doppler processor (100) configured to perform range processing on an input signal in a fast time direction and Doppler processing on the input signal in a slow time direction to output an output signal in a range-Doppler domain, and detect a target signal within the output signal to output a hit;
   a total energy calculator (200) configured to calculate a total energy value in the slow time direction from the input signal;
   a Doppler ratio value calculator (300) configured to calculate a Doppler ratio value of the hit detected in the range-Doppler domain using the total energy value;
   a false target remover (400) configured to compare the Doppler ratio value with a threshold value and removes a hit having a Doppler ratio value smaller than the threshold value; and
   a target detector (500) configured to perform target detection using only a hit having a Doppler ratio value equal to or greater than the threshold value
   wherein the Doppler ratio value has a value of 1 or less in all range-Doppler domains, and
   wherein the Doppler ratio value calculator (300) calculates the Doppler ratio value by equation

$$R_{(i,j)} = \frac{|X(i,j)|^2}{E_i \times P}, \quad 0 \leq R_{(i,j)} \leq 1$$

   and
   $R_{(i,j)}$ denotes the Doppler ratio value, $E_i$ denotes the total energy value, P denotes the number of pulses in the input signal, and $X(i,j)$ denotes the output signal of the range-Doppler domain.

6. The pulse Doppler radar (10) of claim 5, wherein:
   the threshold value is preset by a user and is greater than 0 and less than 1.

FIG. 1

10

Range processor 110, 111

Doppler processor 112

100

Detector 120

Total energy calculator 200

Doppler ratio value calculator 300

False target remover 400

Target detector 500

## FIG. 2

CPI

Process pulse Doppler (including CFAR)

Range-Doppler domain

$t_{PRI}$

$N \cdot \Delta t$

$\Delta t$

pulse#1

slow time (sec)

$P \cdot t_{PRI}$

pulse#P

fast time (sec)

Range domain

RG#N

RG#1

DF#1

$|X(\cdot)|^2$

Doppler domain

DF#D

Detection signal

EP 4 421 518 A1

FIG. 3

FIG. 4

```
                    ┌──────────────┐
                    (    Start     )
                    └──────────────┘
                           │
                           ▼
          ┌─────────────────────────────────────┐
          │   Process pulse Doppler on input signal  │──S110
          └─────────────────────────────────────┘
                           │
                           ▼
          ┌─────────────────────────────────────┐
          │       Calculate total energy value       │──S120
          └─────────────────────────────────────┘
                           │
                           ▼
          ┌─────────────────────────────────────┐
          │       Calculate Doppler ratio value      │──S130
          └─────────────────────────────────────┘
                           │
                           ▼
          ┌─────────────────────────────────────┐
          │     Remove false hit having Doppler ratio   │──S140
          │      value less than threshold value      │
          └─────────────────────────────────────┘
                           │
                           ▼
          ┌─────────────────────────────────────┐
          │    Detect target using hit having Doppler ratio │──S150
          │ value equal to or greater than threshold value │
          └─────────────────────────────────────┘
                           │
                           ▼
                    ┌──────────────┐
                    (     End      )
                    └──────────────┘
```

FIG. 5

FIG. 6

FIG. 7

FIG. 8

Output SNR of target

FIG. 9

Signal Power of target & Interference in input

FIG. 10

Output Power

FIG. 11

Doppler Ratio

FIG. 12

Output Power

**EP 4 421 518 A1**

## EUROPEAN SEARCH REPORT

Application Number

EP 23 18 8106

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 902 833 B1 (STXENGINE CO LTD [KR]) 1 October 2018 (2018-10-01) | 1,3-6,8 | INV. G01S7/292 |
| A | * abstract; figures 3 - 5 * * paragraphs [0022], [0034] - [0037] * * paragraphs [0042], [0073] * | 2,7 | G01S7/41 G01S13/522 G01S13/56 G01S13/58 |
| A | GONG JIANGKUN ET AL: "The Radar Detection Method Based on Detecting Signal to Clutter Ratio (SCR) in the Spectrum", 2019 PHOTONICS & ELECTROMAGNETICS RESEARCH SYMPOSIUM - SPRING (PIERS-SPRING), IEEE, 17 June 2019 (2019-06-17), pages 1876-1882, XP033729053, DOI: 10.1109/PIERS-SPRING46901.2019.9017736 [retrieved on 2020-02-27] * abstract * * page 1877, last paragraph * | 1-8 | |

TECHNICAL FIELDS
SEARCHED      (IPC)

G01S

The present search report has been drawn up for all claims

| Place of search | Date of completion of the search | Examiner |
|---|---|---|
| Munich | 5 February 2024 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 8106

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2024

| Patent document cited in search report | | Publication date | Patent family member(s) | Publication date |
|---|---|---|---|---|
| KR 101902833 | B1 | 01-10-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230024399